# EUROPEAN PATENT APPLICATION

(11) **EP 4 757 117 A1**
(43) Date of publication of application: **10.06.2026**
(21) Application number: 25200652.3
(22) Date of filing: 05.09.2025
(51) Int. Cl.: H02J 9/06

(54) **DEVICE, METHOD, APPARATUS AND MEDIUM FOR SHORT-CIRCUIT DETECTION OF A SWITCHING DEVICE OF AN UNINTERRUPTIBLE POWER SUPPLY**

(30) Priority: 07.12.2024 CN 202510089096
(71) Applicant: Vertiv Corporation, Westerville, OH 43082 (US)
(72) Inventor: Xu, Wei, Shenzhen, 518055 (CN); Chen, Peng, Shenzhen, 518055 (CN); Wei, Yao, Shenzhen, 518055 (CN); Yu, Dongxu, Shenzhen, 518055 (CN); Han, Guoqing, Shenzhen, 518055 (CN)
(74) Representative: Cousens, Nico

(57) **Abstract**

The present application discloses a device, method, apparatus and medium for short-circuit detection of a switching device and an uninterruptible power supply, for performing a short-circuit detection of a switching device connected between a positive electrode and a negative electrode of a battery within the uninterruptible power supply, so as to avoid failures in the uninterruptible power supply due to short-circuit of the switching device and to improve the reliability of the uninterruptible power supply. The uninterruptible power supply includes: a rectifying module connected between mains electricity and a busbar and comprising a first rectifying sub-module and a second rectifying sub-module, a battery, and a charge-discharge module connected between the battery and the busbar and comprising at least: a first switching device connected between the positive and negative electrodes of the battery, and a second switching device connected between the negative electrode of the battery and a negative electrode of the busbar; the positive electrode of the battery is connected with respective alternating-current ports of the first rectifying sub-module via relays, the negative electrode of the battery is connected with respective alternating-current ports of the second rectifying sub-module via relays; and a capacitor is connected between the positive and negative electrodes of the battery.

## Description

### FIELD

The present application relates to power supply field, and in particular, a device, method, apparatus and medium for short-circuit detection of a switching device, and an uninterruptible power supply.

### BACKGROUND

With the update of uninterruptible power supply, high-power uninterruptible power supplies have emerged, and consequently, devices in an uninterruptible power supply becomes more, especially the number of switching devices becomes increasingly more.

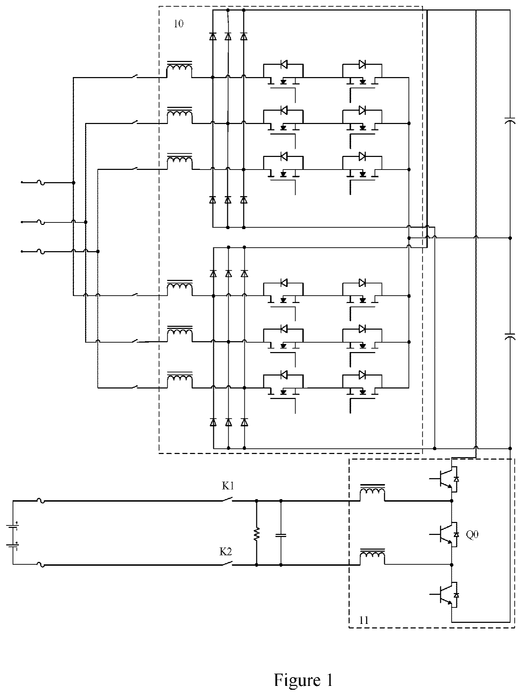

To ensure safety of the uninterruptible power supply, it is necessary to perform detection on whether devices internal to the uninterruptible power supply are short-circuited before execution of the uninterruptible power supply. As shown in FIG. 1, a typical circuit topology structure of an uninterruptible power supply mainly comprises: a rectifying module 10 connected between mains electricity and a busbar, and a charge-discharge module 11 connected between a battery module and the busbar.

Usually, existing detection methods only detect whether the switching devices in the rectifying module 10 are short-circuited, but do not conduct a short-circuit detection on the switching devices in the charge-discharge module 11, which brings potential safety risks. For example, if a switching device Q0 connected between the positive electrode and the negative electrode of the battery in the charge-discharge module 11 becomes short-circuited, Q0 will connect the positive electrode and the negative electrode of the battery when relay K1 and relay K2 are closed, resulting in a huge current occurring in the loop and causing damage to other components in the uninterruptible power supply.

### SUMMARY

The present application provides a device, method, apparatus and medium for short-circuit detection of a switching device and an uninterruptible power supply, for performing short-circuit detection of a switching device connected between a positive electrode and a negative electrode of a battery within the uninterruptible power supply, so as to avoid failures in the uninterruptible power supply due to short-circuit of the switching device and to improve the reliability of the uninterruptible power supply.

In a first aspect, an embodiment of the present application provides an uninterruptible power supply. The uninterruptible power supply comprises a rectifying module, a battery, and a charge-discharge module, wherein
the rectifying module is connected between mains electricity and a busbar, and comprises a first rectifying sub-module and a second rectifying sub-module;
the charge-discharge module is connected between the battery and the busbar, and comprises at least: a first switching device connected between a positive electrode and a negative electrode of the battery, and a second switching device connected between the negative electrode of the battery and a negative electrode of the busbar;
the positive electrode of the battery is connected with respective alternating-current ports of the first rectifying sub-module via relays, the negative electrode of the battery is connected with respective alternating-current ports of the second rectifying sub-module via relays; and a capacitor is connected between the positive electrode and the negative electrode of the battery.

In the uninterruptible power supply described above, the positive electrode of the battery is connected with respective alternating-current ports of the first rectifying sub-module via relays, and the negative electrode of the battery is connected with respective alternating-current ports of the second rectifying sub-module via relays, so that after the uninterruptible power supply is pre-charged and before the rectifying module is connected with the mains electricity, the second switching device and at least one target switching device in the first rectifying sub-module (a switching device, in the first rectifying sub-module, connected with a midpoint of the busbar) can be controlled to be turned on, and a relay between the positive electrode of the battery and the first rectifying sub-module can be controlled to be closed, and then, a short-circuit detection of the first switching device is performed by detecting whether there is current in the branch where the first switching device is located, thereby avoiding failures of the uninterruptible power supply due to short-circuit of a switching device and improving the reliability of the uninterruptible power supply.

In one possible implementation, one end of the first rectifying sub-module is connected with a positive electrode of the busbar, and the other end of the first rectifying sub-module is connected with the midpoint of the busbar; and one end of the second rectifying sub-module is connected with the midpoint of the busbar, and the other end of the second rectifying sub-module is connected with the negative electrode of the busbar.

In one possible implementation, a first relay is connected between a first common end of the capacitor and the first switching device, and the positive electrode of the battery; and a second relay is connected between a second common end of the capacitor and the first switching device, and the negative electrode of the battery.

In one possible implementation, the charge-discharge module further comprises: a third switching device connected between the positive electrode of the battery and the positive electrode of the busbar.

In a second aspect, an embodiment of the present application provides a method for short-circuit detection of a switching device, applied to the uninterruptible power supply provided in the first aspect of the embodiment of the present application, the method comprising:
after the uninterruptible power supply is pre-charged and before the rectifying module is connected with the mains electricity, controlling the second switching device and at least one target switching device in the first rectifying sub-module to be turned on, and controlling a relay between the positive electrode of the battery and the first rectifying sub-module to be closed, wherein the target switching device is a switching device, in the first rectifying sub-module, connected with the midpoint of the busbar; and
determining that the first switching device is short-circuited in case it is detected that there is a current in the branch where the first switching device is located.

In the method described above, after the uninterruptible power supply is pre-charged and before the rectifying module is connected with the mains electricity, the second switching device and at least one target switching device in the first rectifying sub-module are controlled to be turned on, and a relay between the positive electrode of the battery and the first rectifying sub-module is controlled to be closed, wherein the target switching device is a switching device, in the first rectifying sub-module, connected with the midpoint of the busbar; and it is determined that the first switching device is short-circuited in case it is detected that there is a current in the branch where the first switching device is located which, compared with the prior art, enables short-circuit detection of a switching device connected between the positive electrode and the negative electrode of a battery within an uninterruptible power supply, thereby avoiding failures in the uninterruptible power supply due to short-circuit of the switching device and improving the reliability of the uninterruptible power supply.

In one possible implementation, the method further comprises:
determining that the first switching device is normal in case no current is detected in the branch where the first switching device is located.

In a third aspect, an embodiment of the present application provides an apparatus for short-circuit detection of a switching device, applied to the uninterruptible power supply provided in the first aspect of the embodiment of the present application, the apparatus comprising:
a control unit, configured to, after the uninterruptible power supply is pre-charged and before the rectifying module is connected with the mains electricity, control the second switching device and at least one target switching device in the first rectifying sub-module to be turned on, and control a relay between the positive electrode of the battery and the first rectifying sub-module to be closed, wherein the target switching device is a switching device, in the first rectifying sub-module, connected with the midpoint of the busbar;
a detection unit, configured to determine that the first switching device is short-circuited in case it is detected that there is a current in the branch where the first switching device is located.

In one possible implementation, the detection unit is further configured to:
determine that the first switching device is normal in case no current is detected in the branch where the first switching device is located.

In a fourth aspect, an embodiment of the present application provides an electronic device which comprises a processor and a memory, the memory being configured to store a program executable by the processor, and the processor being configured to read the program in the memory and perform the method in any implementation of the first aspect.

In a fifth aspect, an embodiment of the present application further provides a computer storage medium having a computer program stored thereon which is configured to, when executed by a processor, realize steps of the method in the first aspect described above.

In a sixth aspect, the present application provides a computer program product comprising computer program codes which, when executed on a computer, cause a computer to realize the method in any implementation of the first aspect.

The possible technical effects that may be achieved by various aspects in the third, fourth, fifth, and sixth aspects may be obtained by referring to the description of the technical effects that may be achieved by various possible schemes in the second aspect as set forth above, and will not be repeated here.

### BRIEF DESCRIPTION OF THE DRAWINGS

In order to more clearly illustrate technical solutions in embodiments of the present application, drawings needed to be used in the description of the embodiments are briefly described hereinafter. Apparently, the drawings in the following description show only some embodiments of the present application, and other drawings may also be obtained by those ordinarily skilled in the art from these drawings without any creative work.
FIG. 1 is a schematic structural diagram of a circuit topology of an uninterruptible power supply provided by an embodiment of the present application;
FIG. 2 is a schematic diagram of a current flow direction when a short-circuit failure occurs in a switching device in the uninterruptible power supply provided by an embodiment of the present application;
FIG. 3 is a schematic structural diagram of another circuit topology of an uninterruptible power supply provided by an embodiment of the present application;
FIG. 4 is a schematic flowchart of a short-circuit detection method for a switching device provided by an embodiment of the present application;
FIG. 5 is a schematic diagram of a current flow direction when no short-circuit failure occurs in a switching device in the uninterruptible power supply provided by an embodiment of the present application;
FIG. 6 is schematic diagram of a current flow direction when a short-circuit failure occurs in a switching device in another uninterruptible power supply provided by an embodiment of the present application;
FIG. 7 is a schematic flowchart of a specific implementation procedure of a short-circuit detection method for a switching device provided by an embodiment of the present application;
FIG. 8 is a schematic structural diagram of a short-circuit detection apparatus for a switching device provided by an embodiment of the present application; and
FIG. 9 is a schematic structural diagram of an electronic device provided by an embodiment of the present application.

### DETAILED DESCRIPTION

In order to make the objective, technical solution and advantages of the present application clearer, the present application will be further described in detail below in conjunction with the accompanying drawings. Apparently, the described embodiments are only a part of rather than all embodiments of the present application. Based on the embodiments in the present application, all other embodiments obtained by those ordinarily skilled in the art without paying creative work fall into the scope of protection of the present application.

In description of the embodiments of the present application, unless otherwise specified, "/" means "or", for example, "A/B" means "A or B"; the "and/or" herein is simply a way to describe the relationship of associated objects, which means that there may be three kinds of relationships. For example, "A and/or B" may represent three cases: A alone, both A and B, and B alone. In addition, in description of the embodiments of the present application, "multiple" refers to two or more.

Hereinafter, terms "first", "second" are for descriptive purpose only, and should not be interpreted as suggesting or implying relative importance or impliedly indicating the number of technical features indicated. Therefore, a feature defined by "first" and "second" may explicitly or implicitly comprise one or more of the features.

Before introducing an uninterruptible power supply and a short-circuit detection scheme for a switching device in the uninterruptible power supply provided by embodiments of the present application, a detailed introduction to the technical background of embodiments of the present application is first provided to facilitate understanding.

With the update of uninterruptible power supplies, high-power uninterruptible power supplies have emerged, and consequently, devices in an uninterruptible power supply becomes more, especially the number of switching devices becomes increasingly more.

To ensure safety of the uninterruptible power supply, it is necessary to perform detection on whether devices internal to the uninterruptible power supply are short-circuited before execution of the uninterruptible power supply. As shown in FIG. 1, a typical circuit topology structure of an uninterruptible power supply mainly comprises: a rectifying module 10 connected between the mains electricity and a busbar, and a charge-discharge module 11 connected between a battery module and the busbar.

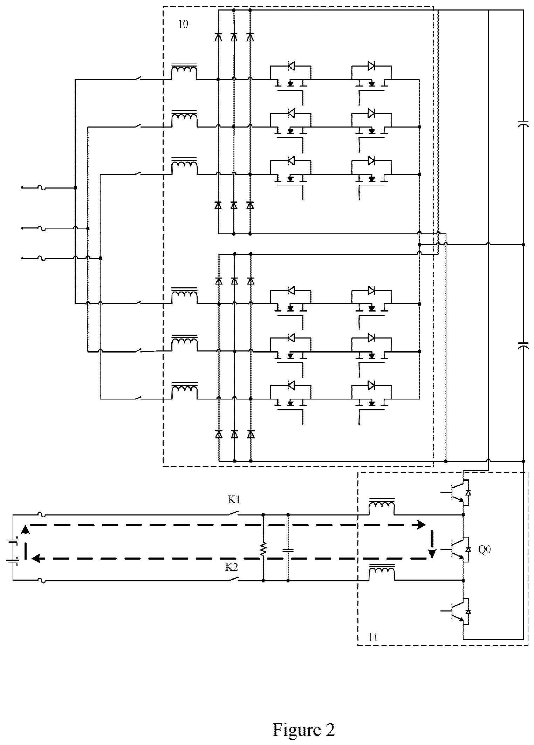

Usually, existing detection methods only detect whether the switching devices in the rectifying module 10 are short-circuited, but do not conduct a short-circuit detection on the switching devices in the charge-discharge module 11, which brings potential safety risks. For example, as shown in FIG. 2, if a switching device Q0 connected between the positive electrode and the negative electrode of the battery in the charge-discharge module 11 becomes short-circuited, Q0 will connect the positive electrode and the negative electrode of the battery when relay K1 and relay K2 are closed, resulting in a huge circuit occurring in the loop shown in FIG. 2 and causing damage to other components in the uninterruptible power supply.

In view of this, embodiments of the present application provides a device, method, apparatus and medium for short-circuit detection of a switching device and an uninterruptible power supply, connecting a positive electrode of the battery to respective alternating-current ports of a first rectifying sub-module via relays, and connecting a negative electrode of the battery to respective alternating-current ports of a second rectifying sub-module via relays, so as to control the second switching device and at least one target switching device in the first rectifying sub-module (a switching device in the first rectifying sub-module connected to the midpoint of the busbar) to be turned on and control the relay between the positive electrode of the battery and the first rectifying sub-module to be closed after the uninterruptible power supply is pre-charged and before the rectifying module is connected to the mains electricity, and to perform a short-circuit detection of the first switching device thereafter by detecting whether there is current in the branch where the first switching device is located, thereby avoiding failures in the uninterruptible power supply due to short-circuit of the switching device and improving the reliability of the uninterruptible power supply.

It should be noted that coordinated control of the rectifying module and the charge-discharge module is achieved via software control by embodiments of the present application, thereby enabling detection of whether a specified switching device (the switching device connected between the positive electrode and the negative electrode of the battery in the uninterruptible power supply) is short-circuited, avoiding a larger damage caused by blindly closing a relay for the battery, and improving the reliability of the uninterruptible power supply.

After the background technology of the embodiments of the present application is introduced, the uninterruptible power supply and the short-circuit detection scheme for the switching device of the uninterruptible power supply provided by embodiments of the present application are described in detail hereinafter, in conjunction with specific embodiments.

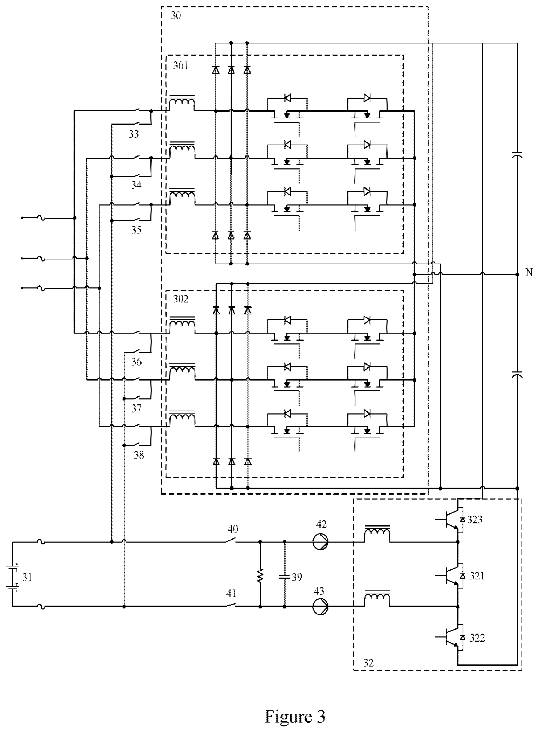

Reference is made to FIG. 3, which is a schematic structural diagram of an uninterruptible power supply in an embodiment of the present application, the uninterruptible power supply comprising a rectifying module 30, a battery 31, and a charge-discharge module 32.

The rectifying module 30 is connected between mains electricity and a busbar, and comprises a first rectifying sub-module 301 and a second rectifying sub-module 302.

The charge-discharge module 32 is connected between the battery 31 and the busbar, and comprises at least: a first switching device 321 connected between a positive electrode and a negative electrode of the battery 31, and a second switching device 322 connected between the negative electrode of the battery 31 and a negative electrode of the busbar.

The positive electrode of the battery 31 is connected to respective alternating-current ports of the first rectifying sub-module 301 via relays (relays 33, 34, and 35), the negative electrode of the battery 31 is connected to respective alternating-current ports of the second rectifying sub-module 302 via relays (relays 36, 37, and 38), and a capacitor 39 is connected between the positive electrode and the negative electrode of the battery 31.

One end of the first rectifying sub-module 301 is connected to a positive electrode of the busbar, and the other end of the first rectifying sub-module 301 is connected to a midpoint (i.e., the point N shown in FIG. 3) of the busbar; one end of the second rectifying sub-module 302 is connected to the midpoint of the busbar, and the other end of the second rectifying sub-module 302 is connected to the negative electrode of the busbar.

In a specific implementation, a relay is connected between a first common end of the capacitor 39 and the first switching device 321, and the positive electrode of the battery 31; and a relay is connected between a second common end of the capacitor 39 and the first switching device 321, and the negative electrode of the battery 31. Specifically, a relay 40 is connected between a first common end of the capacitor 39 and the first switching device 321, and the positive electrode of the battery 31; and a relay 41 is connected between a second common end of the capacitor 39 and the first switching device 321, and the negative electrode of the battery 31

In practical applications, the charge-discharge module 32 further comprises a third switching device 323 connected between a positive electrode of the battery 31 and the positive electrode of the busbar. Needless to say, the charge-discharge module 32 may also comprise other components such as inductors etc., which are not limited in embodiments of the present application.

In some embodiments, in the uninterruptible power supply provided by the embodiment of the present application, a current sensor 42 and a current sensor 43 may further be disposed in the branches by which the capacitor 39 is connected with the first switching device 321, respectively, for detecting whether current is present in the corresponding branch.

The structure of the uninterruptible power supply provided by embodiments of the present application is described as above. Hereinafter, by taking the uninterruptible power supply shown in FIG. 3 as an example, the short-circuit detection method for the switching device provided by an embodiment of the present application will be described in detail.

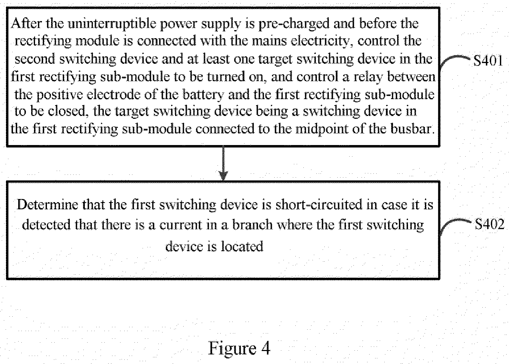

Reference is made to FIG. 4, which is a flowchart for implementing a short-circuit detection method for a switching device in an embodiment of the present application, which is applied to the uninterruptible power supply provided in the above-described embodiment of the present application, and of which the executing entity may be a controller within the uninterruptible power supply. The specific flow for implementing the method is as below in S401 to S402.

In S401: after the uninterruptible power supply is pre-charged and before the rectifying module is connected with the mains electricity, control the second switching device and at least one target switching device in the first rectifying sub-module to be turned on, and control a relay between the positive electrode of the battery and the first rectifying sub-module to be closed, the target switching device being a switching device, in the first rectifying sub-module, connected to the midpoint of the busbar.

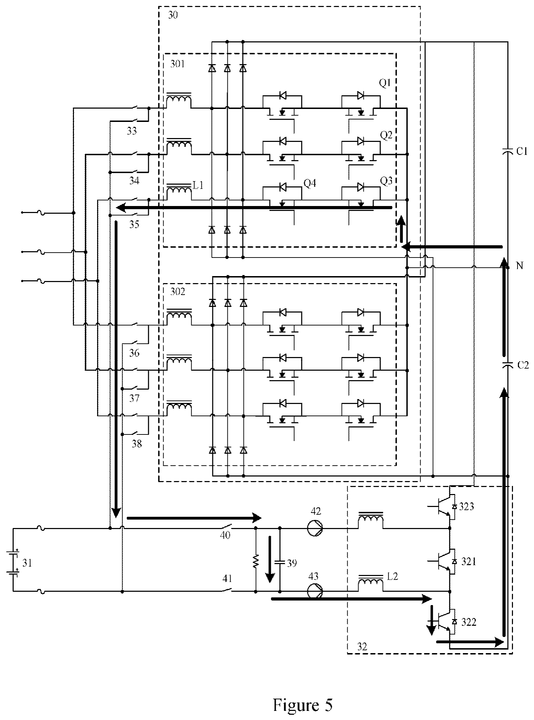

In a specific implementation, as shown in FIG. 5, after the mains switch is turned on and the mains power is applied, the voltage of the capacitor C1 of the positive busbar and the voltage of the capacitor C2 of the negative busbar are increased under the effect of the pre-charging circuit. Before the rectifying module 30 is connected with the mains electricity, the second switching device 322 and at least one target switching device in the first rectifying sub-module 301 are controlled to be turned on, and the relays (i.e., relays 33, 34, and 35) between the positive electrode of the battery and the first rectifying sub-module are controlled to be closed, wherein the target switching device is a switching device in the first rectifying sub-module 301 that is connected to the midpoint of the busbar, namely, the switching devices Q1, Q2, and Q3 shown in FIG. 5.

In other embodiments of the present application, when one or more of the switching devices Q1, Q2, and Q3 are controlled to be turned on, whether relays 33, 34, and 35 are closed may be changed according to the on-off conditions of switching devices Q1, Q2, and Q3, respectively.

Specifically, if the switching device Q1 is controlled to be turned on, the relay 33 may be controlled to be closed; and if the switching device Q1 is controlled to be turned off, the relay 33 may remain in an open state. If the switching device Q2 is controlled to be turned on, the relay 34 may be controlled to be closed; and if the switching device Q2 is controlled to be turned off, the relay 34 may remain in an open state. If the switching device Q3 is controlled to be turned on, the relay 35 may be controlled to be closed; and if the switching device Q3 is controlled to be turned off, the relay 35 may remain in an open state.

It should be noted that if the relays 40 and 41 are disposed in the uninterruptible power supply, the relay 40 is controlled to be closed.

In this condition, if the first switching device 321 is not short-circuited, taking the switching device Q3 being turned on as an example, the current loop (as shown by the dashed line in FIG. 5) is: the midpoint N of the busbar-the switching device Q3 →the anti-parallel diode of switching device Q4 →the inductor L1 →the relay 35 →the relay 40 →the capacitor 39 →the current sensor 43 →the inductor L2 →the second switching device 322 →the negative electrode of the busbar. No current flows through the branch where the first switching device 321 is located, and no current is detected by the current sensor 42. In other words, if the first switching device 321 is not short-circuited, no current flows through the branch where the first switching device 321 is located.

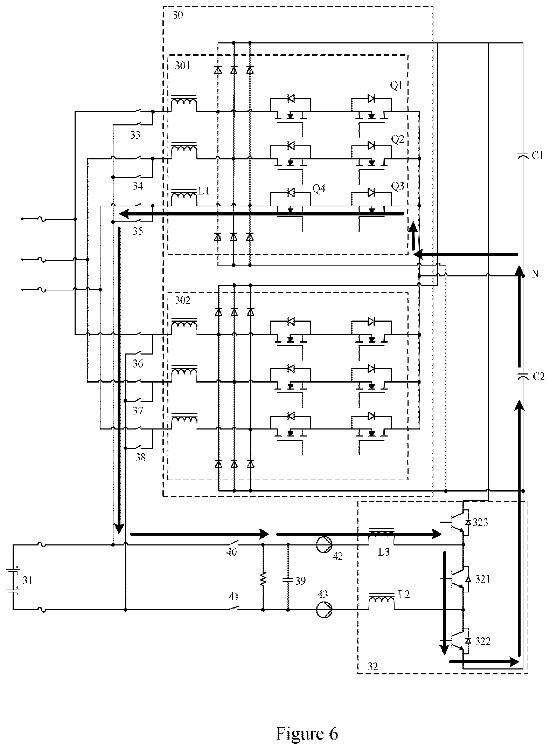

If the first switching device 321 is short-circuited, still taking the switching deviceQ3 being turned on as an example, the current loop (as shown by the dashed line in FIG. 6) is: midpoint N of the busbar →the switching device Q3 →the anti-parallel diode of switching device Q4 →the inductor L1 →the relay 35 →the relay 40 →the current sensor 42 →the inductor L3 →the first switching device 321 →the second switching device 322 →the negative electrode of the busbar. There is a current flowing through the branch where the first switching device 321 is located, and a current can be detected by the current sensor 42. In other words, if the first switching device 321 is short-circuited, a current flows through the branch where the first switching device 321 is located.

Therefore, in a specific implementation, after controlling the second switching device and at least one target switching device in the first rectifying sub-module to be turned on and controlling the relay between the positive electrode of the battery and the first rectifying sub-module to be closed, whether a current exists in the branch where the first switching device 321 is located may be detected by the current sensor 42, whereby whether the first switching device is short-circuited is determined.

In S402, determine that the first switching device is short-circuited in case it is detected that there is a current in a branch where the first switching device is located.

Conversely, it is determined that the first switching device 321 is normal in case no current is detected in the branch where the first switching device is located.

Specifically, in order to detect whether there is a current in the branch where the first switching device is located, a current sensor, such as the current sensor 42 shown in FIGS. 5 and 6, may be disposed in the branch where the first switching device is located for detection,.

It should be noted that in other embodiments of the present application, it can also be determined that a short-circuit failure occurs in the first switching device 321 in case the current sensor 42 detects a current while no current is detected by the current sensor 43; and it can be determined that the first switching device 321 is normal in case no current is detected by the current sensor 42 while the current sensor 43 detects a current.

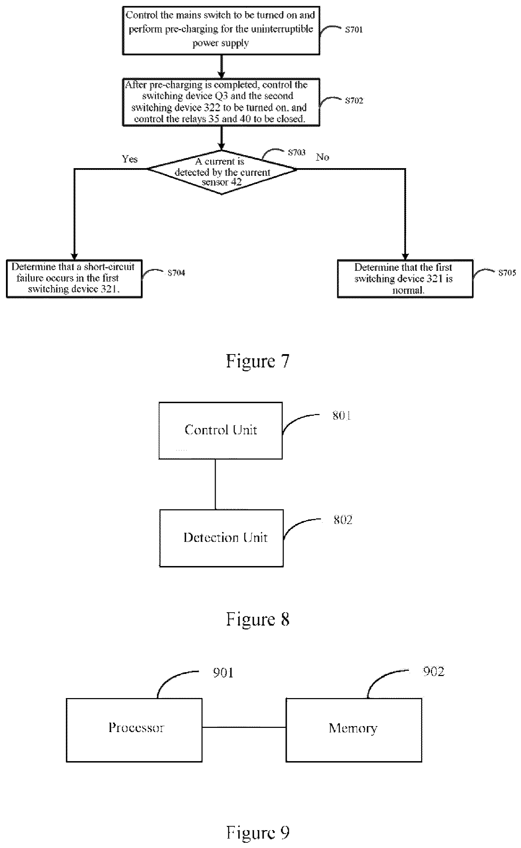

Hereinafter, taking the uninterruptible power supply shown in FIG. 6 as an example, a detailed description is provided for the specific implementation process of the short-circuit detection method for the switching device provided by an embodiment of the present application in conjunction with FIG. 7.

As shown in FIG. 7, the specific implementation process of the short-circuit detection method for the switching device provided by the embodiment of the present application comprises S701 to S705.

In S701, control the mains switch to be turned on and perform pre-charging for the uninterruptible power supply.

In S702, after pre-charging is completed, control the switching device Q3 and the second switching device 322 to be turned on, and control the relays 35 and 40 to be closed.

In S703, determine whether a current is detected by the current sensor 42, if yes, perform S704; and if no, perform S705.

In S704, if a current is detected by the current sensor 42, determine that a short-circuit failure occurs in the first switching device 321.

In S705, if no current is detected by the current sensor 42, determine that the first switching device 321 is normal.

Based on the same idea, an embodiment of the present application further provides a short-circuit detection apparatus for a switching device, which is applied to the uninterruptible power supply provided by the embodiment of the present application. The principle of solving a problem by this apparatus is similar to the principle of solving the problem by the above method. For implementation of the apparatus, implementation of the method may be referenced, and redundant description will be omitted.

As shown in FIG. 8, an embodiment of the present application provides a short-circuit detection apparatus for a switching device, the apparatus comprising:
a control unit 801 configured to, after the uninterruptible power supply is pre-charged and before the rectifying module is connected with the mains electricity, control the second switching device and at least one target switching device in the first rectifying sub-module to be turned on, and control a relay between the positive electrode of the battery and the first rectifying sub-module to be closed, wherein the target switching device is a switching device in the first rectifying sub-module connected with a midpoint of the busbar; and
a detection unit 802 configured to determine that the first switching device is short-circuited in case it is detected that there is a current in a branch where the first switching device is located.

In one possible implementation, the detection unit 802 is further configured to:
determine that the first switching device is normal in case no current is detected in the branch where the first switching device is located.

Based on the same idea, an embodiment of the present application further provides an electronic device. The principle by which the device solves the problem is similar to the principle by which the method described above does. For implementation of the device, implementation of the method may be referenced to, and redundant description will be omitted.

As shown in FIG. 9, the electronic device provided by the embodiment of the present application comprises: a processor 901; and a memory 902 for storing instructions executable by the processor 901, wherein the processor 901 is configured to realize the following steps by executing the executable instructions to :
after the uninterruptible power supply is pre-charged and before the rectifying module is connected with the mains electricity, controlling the second switching device and at least one target switching device in the first rectifying sub-module to be turned on, and controlling a relay between the positive electrode of the battery and the first rectifying sub-module to be closed, wherein the target switching device is a switching device in the first rectifying sub-module connected with a midpoint of the busbar; and
determining that the first switching device is short-circuited in case it is detected that there is a current in a branch where the first switching device is located.

In one possible implementation, the processor 901 is further configured to perform:
determining that the first switching device is normal in case no current is detected in the branch where the first switching device is located.

Based on the same inventive idea, a computer storage medium is provided an embodiment of the present application. The computer storage medium comprises computer program codes which, when executed on a computer, cause the computer to perform any of the short-circuit detection methods for the switching device described previously. Since the principle by which the computer storage medium solves the problem is similar to the principle by which the short-circuit detection method for the switching device does, implementation of the method may referenced to by implementation of the computer storage medium, and redundant description will be omitted.

In a specific implementations, the computer storage medium may comprise various storage mediums capable of storing program codes such as a universal serial bus flash drive (USB, Universal Serial Bus Flash Drive), a mobile hard disk, a read-only memory (ROM, Read-Only Memory), a random access memory (RAM, Random Access Memory), a magnetic disk, an optical disc, or the like.

Based on the same inventive idea, a computer program product is further provided in an embodiment of the present application. The computer program product comprises computer program codes which, when executed on a computer, cause the computer to perform any of the short-circuit detection methods for the switching device described previously. Since the principle by which the computer program product solves the problem is similar to the principle by which the short-circuit detection method for the switching device does, implementation of the method may be referenced to by implementation of the computer program product, and redundant description will be omitted.

The computer program product may utilize one or more readable mediums in any combination. The readable medium may be a readable signal medium or a readable storage medium. The readable storage medium may include but is not limited to electrical, magnetic, optical, electromagnetic, infrared, or semiconductor systems, apparatuses, or devices, or any combination thereof. More specific examples (a non-exhaustive list) of readable storage medium include: electrical connection with one or more conductive wires, a portable disk, a hard disk, a random access memory (RAM), a read only memory (ROM), an erasable programmable read-only memory (EPROM or flash memory), an optical fiber, a portable compact disk read-only memory (CD-ROM), an optical storage device, a magnetic storage device, or any suitable combination of the above.

It should be understood by those skilled in the art that an embodiment of the present application may be provided as a method, a system or a computer program product. Therefore, the present application may take a form of an embodiment implemented wholly by hardware, an embodiment implemented wholly by software, or an embodiment implemented by combining software and hardware. Moreover, the present application may take a form of a computer program product implemented on one or more computer-usable storage mediums (including but not limited to a magnetic disk memory, an optical memory, and the like) containing computer-usable program codes.

The present application is described with reference to flowcharts and/or block diagrams of the method, the apparatus (system), and the computer program product according to embodiments of the present application. It should be understood that each flow and/or block in the flowcharts and/or block diagrams and a combination of a flow and/or a block in the flowcharts and/or block diagrams may be implemented by computer program instructions. The computer program instructions may be installed in a general-purpose computer, a dedicated computer, an embedded processor or processors of other programmable data processing devices to generate a machine, such that the instructions executed by the computer or the processors of the other programmable data processing devices generate an apparatus for implementing functions specified in one or more flows of the flowcharts and/or one or more blocks of the block diagrams.

The computer program instructions may also be stored in a computer readable memory which can guide the computer or other programmable data processing devices to operate in a certain manner, such that the instructions stored in the computer readable memory generate a manufacture including an instruction apparatus which implements functions specified in one or more flows of the flowcharts and/or one or more blocks of the block diagrams.

The computer program instructions may also be loaded onto a computer or other programmable data processing devices, so that the computer or the other programmable device performs a series of operational steps to produce a computer-implemented processing. Thus, instructions executed on the computer or the other programmable devices provide steps for implementing functions specified in one or more flows in the flowcharts and/or one or more blocks in the block diagrams. Apparently, those skilled in the art may make various modifications and variations to the present application without departing from the spirit and scope of the present application. Thus, if these variations and modifications of the present application fall within the scope of the claims of the present application, the present application is intended to include these variations and modifications.

## Claims

1. An uninterruptible power supply, comprising: a rectifying module, a battery, and a charge-discharge module, wherein:
the rectifying module is configured to be connected between mains electricity and a busbar, and comprises a first rectifying sub-module and a second rectifying sub-module;
the charge-discharge module is connected between the battery and the busbar, and comprises at least :
a first switching device connected between a positive electrode and a negative electrode of the battery, and
a second switching device connected between the negative electrode of the battery and a negative electrode of the busbar;
the positive electrode of the battery is connected with respective alternating-current ports of the first rectifying sub-module via relays;
the negative electrode of the battery is connected with respective alternating-current ports of the second rectifying sub-module via relays; and
a capacitor is connected between the positive electrode and the negative electrode of the battery.

2. The uninterruptible power supply according to claim 1, wherein:
one end of the first rectifying sub-module is connected with a positive electrode of the busbar, and the other end of the first rectifying sub-module is connected with a midpoint of the busbar; and
one end of the second rectifying sub-module is connected with the midpoint of the busbar, and the other end of the second rectifying sub-module is connected with the negative electrode of the busbar.

3. The uninterruptible power supply according to claim 1 or 2, wherein:
a first relay is connected between a first common end of the capacitor and the first switching device, and the positive electrode of the battery; and
a second relay is connected between a second common end of the capacitor and the first switching device, and the negative electrode of the battery.

4. The uninterruptible power supply according to any preceding claim, wherein the charge-discharge module further comprises: a third switching device connected between the positive electrode of the battery and a positive electrode of the busbar.

5. A method for short-circuit detection of a switching device, applied to the uninterruptible power supply according to any preceding claim, comprising:
after the uninterruptible power supply is pre-charged and before the rectifying module is connected with the mains electricity, controlling the second switching device and at least one target switching device in the first rectifying sub-module to be turned on, and controlling a relay between the positive electrode of the battery and the first rectifying sub-module to be closed, wherein the target switching device is a switching device, in the first rectifying sub-module, connected with a midpoint of the busbar; and
determining that the first switching device is short-circuited, in case it is detected that there is a current in the branch where the first switching device is located.

6. The method according to claim 5, further comprising:
determining that the first switching device is normal, in case no current is detected in the branch where the first switching device is located.

7. An apparatus for short-circuit detection of a switching device, applied to the uninterruptible power supply according to any one of claims 1 to 4, comprising:
a control unit configured to, after the uninterruptible power supply is pre-charged and before the rectifying module is connected with the mains electricity, control the second switching device and at least one target switching device in the first rectifying sub-module to be turned on, and control a relay between the positive electrode of the battery and the first rectifying sub-module to be closed, wherein the target switching device is a switching device, in the first rectifying sub-module, connected with a midpoint of the busbar; and
a detection unit configured to determine that the first switching device is short-circuited in case it is detected that there is a current in the branch where the first switching device is located.

8. The apparatus according to claim 7, wherein the detection unit is further configured to:
determine that the first switching device is normal in case no current is detected in the branch where the first switching device is located.

9. An electronic device, comprising:
a processor; and
a memory for storing instructions executable by the processor, wherein
the processor is configured to execute the executable instructions to realize steps of the method according to claim 5 or 6.

10. A computer storage medium having a computer program stored thereon which, when executed by a processor, realizes steps of the method according to claim 5 or 6.
